# EUROPÄISCHE PATENTSCHRIFT

(11) **EP 1 492 139 B1**
(45) Veröffentlichungstag und Bekanntmachung des Hinweises auf die Patenterteilung: **06.01.2016**
(21) Anmeldenummer: 04014044.4
(22) Anmeldetag: 16.06.2004
(51) Int. Cl.: H01H 39/00

(54) **Meissel für ein pyromechanisches Trennelement**
Chisel for pyromechanical separator
Ciseau pour element de séparation pyromecanique

(30) Priorität: 26.06.2003 DE 10328922; 06.04.2004 DE 102004016884
(43) Veröffentlichungstag der Anmeldung: 29.12.2004
(73) Patentinhaber: Autoliv Development AB, 447 83 Vårgårda (SE)
(72) Erfinder: Knauss, Jürgen, 90587 Obermichelbach (DE); Kordel, Gerhard, 90455 Nürnberg-Kornburg (DE)
(74) Vertreter: Becker, Thomas

(56) Entgegenhaltungen:
- EP-A- 0 827 169
- EP-A- 1 074 033
- DE-A- 19 616 994
- DE-A- 19 732 650
- DE-U- 29 700 594
- US-A- 4 224 487
- US-A- 4 419 979
- PATENT ABSTRACTS OF JAPAN Bd. 2000, Nr. 07, 29. September 2000 (2000-09-29) & JP 2000 123695 A (NICHIYU GIKEN KOGYO CO LTD), 28. April 2000 (2000-04-28)

## Beschreibung

Die Erfindung betrifft ein pyromechanisches Trennelement nach dem Oberbegriff des Anspruchs 1.

Die DE 197 32 650 A1 beschreibt ein pyromechanisches Trennelement mit einem Gehäuse in dem ein elektrischer Leiter angeordnet ist und mit einem Trennkolben und einem darauf angeordneten Trennmeißel aus Kunststoff zum Durchtrennen des elektrischen Leiters und mit einem pyrotechnischen Anzünder, in dem eine pyrotechnische Ladung zum Antrieb des Trennkolbens angeordnet ist, wobei der Trennmeißel eine Schneidkante aufweist, die bei Antrieb des Trennkolbens bzw. des Trennmeißels und beim Durchtrennen des elektrischen Leiters an einer Gegenkante des Gehäuses oder eines Bauteils des Gehäuses entlanggleitet.

Derartige Trennelemente können z. B. zur Unterbrechung der Stromzufuhr in das Bordnetz eines Kraftfahrzeuges verwendet werden. Bei einem Unfall werden diese Trennelemente ausgelöst, wodurch die Stromzufuhr unterbrochen wird und dadurch die Brandgefahr verringert ist.

Von Nachteil ist, dass bedingt durch die Festigkeitseigenschaften des Trennmeißels aus Kunststoff die Trennleistung (Durchtrennung eines elektrischen Leiters mit einem bestimmten Querschnitt) begrenzt bleibt.

Gestaltet man einen Trennmeißel und die Schnittkante beispielsweise komplett aus Keramik, wirkt sich dies negativ auf die Bauteilkosten aus.

Der Erfindung liegt die Aufgabe zu Grunde, ein Trennelement mit einem Trennmeißel aus Kunststoff nach dem Oberbegriff des Anspruchs 1 so weiterzubilden, dass der Trennmeißel ohne wesentliche Erhöhung seiner Herstellkosten eine bessere Trennleistung aufweist, d. h. Leiter mit einem größeren Querschnitt trennen kann.

Erfindungsgemäß wird diese Aufgabe dadurch gelöst, dass die Schneidkante des Trennmeißels und/oder die Gegenkante des Gehäuses oder eines Bauteils des Gehäuses aus einem eingesetzten Konstruktionselement mit einer größeren Härte als Kunststoff besteht.

In zweckmäßiger Ausgestaltung besteht das Konstruktionselement aus Stahl oder einer Keramik, wobei sinnvollerweise das Konstruktionselement scharfe Schnittkanten aufweist.

Die durch das Konstruktionselement gebildete Schneidkante des Trennmeißels ist bevorzugt im Längsschnitt v-förmig, spitz zulaufend oder schräg verlaufend ausgebildet. Vorteilhaft liegt der Winkel der Schneidkante des Trennmeißels an der Stirnseite des Konstruktionselementes zwischen 180 Grad und 90 Grad liegt. Die angeführten Formen der Schneidkante haben den Vorteil, dass die Schneide nicht sofort mit der vollen Breite auf die Trennstelle des zu trennenden elektrischen Leiters auftrifft, sondern an zwei beziehungsweise einer Auftreffstelle beginnend in den Werkstoff eindringt. Bei einer V-förmigen Schneide wird die Trennkraft mit abnehmenden Spreizwinkel der beiden V-Schenkel zunehmend geringer.

In bevorzugter spezieller Ausgestaltung hat das Konstruktionselement die Form eines Plättchens.

In vorteilhafter Ausgestaltung reicht das Konstruktionselement des Trennmeißels bis in den Trennkolben und erstreckt sich dort im wesentlichen senkrecht zur Schneidkante. Bevorzugt weist das Konstruktionselement des Trennmeißels die Form eines Winkels oder die Form eines "L" auf. Diese Formen des Konstruktionselementes bewirken eine bessere Druckverteilung von der Schneidkante auf den Boden des Trennmeißels und damit auf den Trennkolben bei der Krafteinleitung durch den Trennvorgang auf den Trennmeißel und reduziert so die Gefahr des Durchdrückens des Trennmeißels durch den Trennkolben durch eine Vergrößerung der Auflagefläche.

Bevorzugt wird der Trennkolben mit dem Trennmeißel und/oder das Gehäuses oder ein Bauteil des Gehäuses durch Kunststoffspritztechnik hergestellt und das Konstruktionselement beim Kunststoffspritzen in die Kunststoffspritzform eingelegt und ist so ein integraler Bestandteil des Trennmeißels bzw. des Gehäuses oder des Bauteils des Gehäuses.

Nachfolgend wird die Erfindung an Hand von Ausführungsbeispielen näher erläutert.

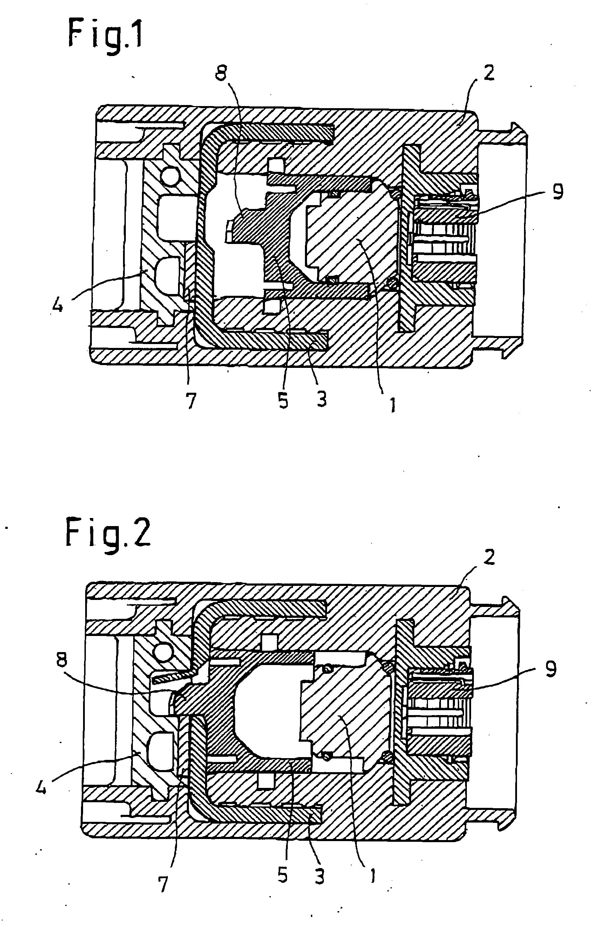

Fig. 1 zeigt eine pyrotechnische Trennvorrichtung für eine Batterieabschaltung in einem Kraftfahrzeug mit einem pyrotechnischen Anzünder 1 in dem eine pyrotechnische Ladung zum Antrieb eines Trennkolbens 5 angeordnet ist. Gezündet wird der Anzünder 1 elektrisch, wobei die elektrischen Zuleitungen über einen Stecker 9 am Gehäuse 1 erfolgt. Bei Zündung des Anzünders 1 beschleunigen die durch die pyrotechnische Ladung gebildeten Antriebsgase den Trennkolben 5, auf dem ein Trennmeißel 8 angeordnet ist, in Richtung auf einen elektrischen Leiter 3 und der Trennmeißel 8 trennt den Leiter 3 aufgrund seiner kinetischen Energie an einer Trennstelle. Der elektrische Leiter 3 ist durch ein Bauteil 4 (hier auch Riegel genannt) im Gehäuse 2 eingeklemmt. Im Bereich der Trennstelle ist im Bauteil 4 eine Ausnehmung angeordnet. Der Rand der Ausnehmung bildet eine Gegenkante an der der Trennmeißel 8 beim Durchtrennen des Leiters 3 entlanggleitet. Der elektrische Leiter 3 ist eine Stromschiene, wobei die Stromschiene 3 mit ihren beiden Enden aus dem Gehäuse 2 herausgeführt sind (hier nicht gezeigt). An den beiden herausgeführten Enden sind die zu trennenden elektrischen Kabel oder Leitungen angeschlossen.

Die Trennung des elektrischen Leiters 3 erfolgt somit durch einen Schneidvorgang, der eingeleitet wird, wenn der Trennmeißel 8 auf den elektrischen Leiter 3 aufschlägt. Die mit "A" bezeichnete Kante des Bauteils 4 bzw. des Riegels (siehe Fig. 1) bildet die notwendige Gegenkante zum Zwecke des Schneidvorganges durch den Trennmeißel 8, der die Funktion des "Schnittstempels" übernimmt. Bei normalen Schnittwerkzeugen ist diese Kante scharf und von hoher Festigkeit, welches aufgrund der Materialeigenschaften des Bauteils bzw. des Riegels 4 (Kunststoff) und des Herstellungsverfahrens (Kunststoffspritztechnik) nur bedingt gegeben ist.

Erfindungsgemäß besteht daher die Schneidkante des Trennmeißels 8 und/oder die Gegenkante des Gehäuses 2 oder eines Bauteils 4 des Gehäuses 2 aus einem eingesetzten Konstruktionselement 6, 7 mit einer größeren Härte als Kunststoff. In Figur 1 ist dies nicht gezeigt.

Figur 2 zeigt das Trennelement nach erfolgter Zündung des Anzünders 1 und nach erfolgter Trennung des elektrischen Stromleiters 3. Der Trennkolben 5 wurde durch die Antriebsgase der pyrotechnischen Ladung des Anzünders 1 auf den Leiter 3 zu beschleunigt, wobei der auf dem Trennkolben 5 angeordnete Trennmeißel 8 den elektrischen Leiter 3 an der Trennstelle durchtrennt hat.

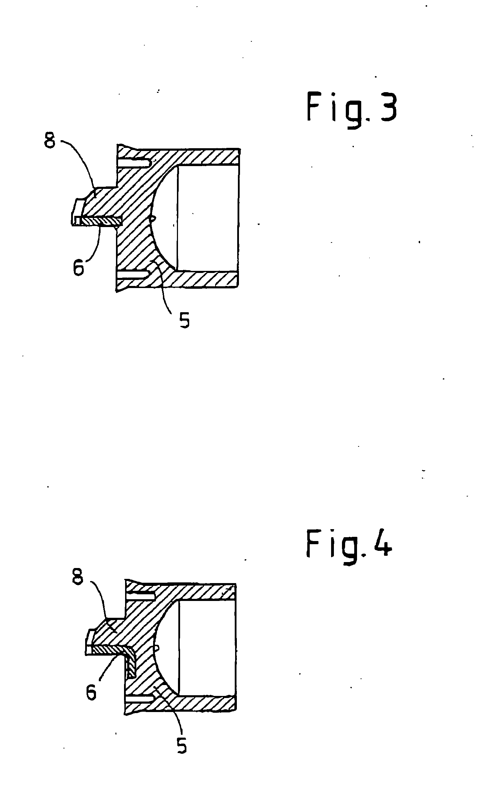

Figur 3 zeigt den Trennkolben 5 mit einem Trennmeißel 8 nach den Figuren 1 und 2. Der Trennmeißel 8 ist mit einem erfindungsgemäßen zusätzlichen Konstruktionselement 6 als Einsatz in Form eines Stahl- oder Keramikplättchens versehen dargestellt, welcher das eigentliche Schneidmesser zum Durchtrennen des Stromleiters 3 bildet. Die Form der Schneide muss auf den durchzutrennenden Werkstoff abgestimmt sein. Sie ist entweder V-förmig, spitz zulaufend oder schräg verlaufend geformt. Die angeführten Formen haben den Vorteil, dass die Schneide nicht sofort mit der vollen Breite auf die Trennstelle des zu trennenden elektrischen Leiters 3 auftrifft, sondern an zwei beziehungsweise einer Auftreffstelle beginnend in den Werkstoff eindringt. Bei einer V-förmigen Schneide wird die Trennkraft mit abnehmenden Spreizwinkel der beiden V-Schenkel zunehmend geringer.

Eine weitere vorteilhafte Form des Konstruktionselementes 6 als Schneidmessereinsatz im Trennmeißel 8 zeigt Fig. 4. Das Konstruktionselement 6 in Form eines Einsatzes besteht hier aus Keramik in Form eines Winkels bzw. in Form eines "L". Diese Form bewirkt eine bessere Druckverteilung auf den Boden des Trennmeißels 8 bei der Krafteinleitung durch den Trennvorgang und reduziert die Gefahr des Durchdrückens durch eine Erhöhung der Auflagefläche.

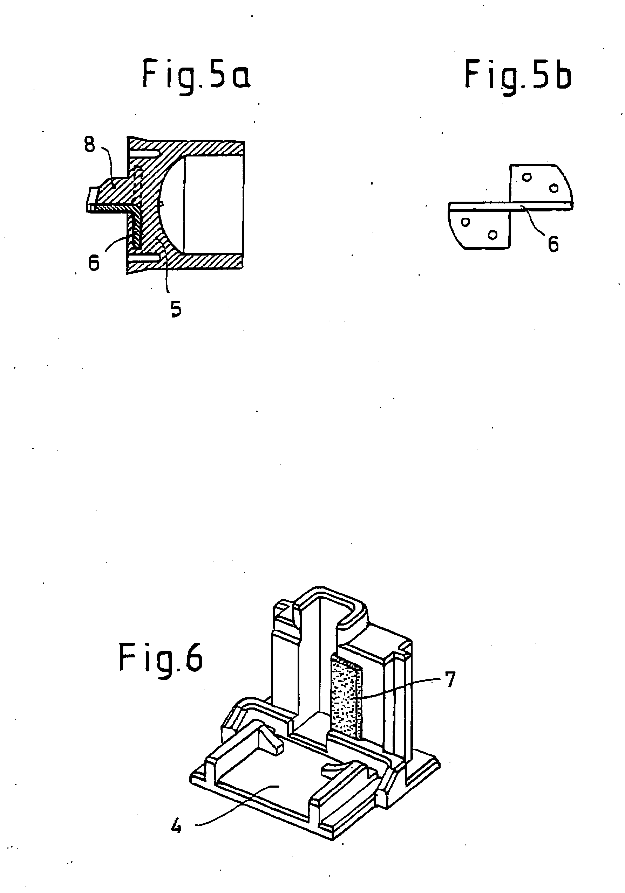

Figur 5a, 5b zeigen die Ausgestaltung des Konstruktionselementes 6 als Schneidmessereinsatz im Trennmeißel 8 in Form eines Stahlbiegeteiles. Auch hier bewirkt die Bodenformgebung des Schneidmessereinsatzes bedingt durch die relativ große Auflagefläche einen relativ geringen Flächendruck auf die Auflagefläche des Trennmeißels 8 und reduziert so die Gefahr des Durchdrückens aufgrund der Krafteinleitung durch den Trennvorgang.

Die Konstruktionselemente 6 in ihrer Funktion als Schneidmessereinsätze im Trennmeißel 8 werden als Einlegeteile beim Herstellungsprozesses des Trennmeißels 8 (Kunststoffspritztechnik) mit in die Kunststoffspritzform des Trennmeißels 8 eingelegt und sind nach dem Spritzvorgang ein integraler Bestandteil des Trennmeißels 8. Figur 6 zeigt ein Bauteil 4 bzw. Riegel mit Stahl- oder Keramikeinsatz 7 zum Beispiel in Form eines Plättchens, der ein deutlich verbessertes Trennverhalten ermöglicht, da sowohl Härte als auch die Kante auf Grund der Werkstoffeigenschaften und die Fertigungstechnologie ein gutes Trennverhalten bedingen.

Dieser eingelegte Stahl- oder Keramikeinsatz 7 ist außerdem in Fig.2 dargestellt.

## Patentansprüche

1. Pyromechanisches Trennelement mit einem Gehäuse (2) in dem ein elektrischer Leiter (3) angeordnet ist, mit einem Trennkolben (5) und einem darauf angeordneten Trennmeißel (8) aus Kunststoff zum Durchtrennen des elektrischen Leiters (3) und mit einem pyrotechnischen Anzünder (1) in dem eine pyrotechnische Ladung zum Antrieb des Trennkolbens (5) angeordnet ist, wobei der Trennmeißel (8) eine Schneidkante aufweist, die bei Antrieb des Trennkolbens (5) bzw. des Trennmeißels (8) und beim Durchtrennen des elektrischen Leiters (3) an einer Gegenkante des Gehäuses (2) oder eines Bauteils (4) des Gehäuses (2) entlanggleitet, **dadurch gekennzeichnet, dass** die Schneidkante des Trennmeißels (8) und/oder die Gegenkante des Gehäuses (2) oder eines Bauteils (4) des Gehäuses (2) aus einem eingesetzten Konstruktionselement (6, 7) mit einer größeren Härte als Kunststoff besteht.

2. Trennelement nach Anspruch 1, **dadurch gekennzeichnet, dass** das Konstruktionselement (6, 7) aus Stahl oder einer Keramik besteht.

3. Trennelement nach Anspruch 1 oder 2, **dadurch gekennzeichnet, dass** das Konstruktionselement (6, 7) scharfe Schnittkanten aufweist.

4. Trennelement nach einem der Ansprüche 1 bis 3, **dadurch gekennzeichnet, dass** die durch das Konstruktionselement (6) gebildete Schneidkante des Trennmeißels (8) im Längsschnitt v-förmig, spitz zulaufend oder schräg verlaufend ausgebildet ist.

5. Trennelement nach Anspruch 4, **dadurch gekennzeichnet, dass** der Winkel der Schneidkante des Konstruktionselementes (6) des Trennmeißels (8) an der Stirnseite zwischen 180 Grad und 90 Grad liegt.

6. Trennelement nach einem der Ansprüche 1 bis 5, **dadurch gekennzeichnet, dass** das Konstruktionselement (6, 7) die Form eines Plättchens hat.

7. Trennelement nach einem der Ansprüche 1 bis 6, **dadurch gekennzeichnet, dass** das Konstrukhonselement (6) des Trennmeißels (8) bis in den Trennkolben (5) reicht und sich dort im wesentlichen senkrecht zur Schneidkante erstreckt.

8. Trennelement nach Anspruch 7, **dadurch gekennzeichnet, dass** das Konstruktionselement (6) des Trennmeißels (8) die Form eines Winkels oder die Form eines "L" aufweist

9. Trennelement nach einem der Ansprüche 1 bis 8, **dadurch gekennzeichnet, dass** der Trennkolben (5) mit dem Trennmeißel (8) und/oder das Gehäuse (2) oder ein Bauteil (4) des Gehäuses (2) durch Kunststoffspritztechnik hergestellt sind und das Konstruktionselement (6, 7) beim Kunststoffspritzen in die Kunststoffspritzform eingelegt wird und so ein integraler Bestandteil des Trennmeißels (8) bzw. des Gehäuses (2) oder des Bauteils (4) des Gehäuses (2) ist.

## Claims

1. A pyromechanical separating element including a housing (2) wherein an electric conductor (3) is disposed, moreover including a separating piston (5) and a separating chisel (8) made of plastic and disposed on the separating piston (5), which separating chisel (8) is for cutting the electrical conductor (3), and furthermore including a pyrotechnic igniter (1) wherein a pyrotechnic charge for the driving of the separating piston (5) is disposed, wherein the separating chisel (8) has a cutting edge that slides along a counter-edge of the housing (2) or of a component (4) of the housing (2) during the driving of the separating piston (5) or of the separating chisel (8) and during the cutting of the electrical conductor (3), **characterised in that** the cutting edge of the separating chisel (8) and/or the counter-edge of the housing (2) or of a component (4) of the housing (2) is comprised of an inserted structural element (6, 7) having a hardness greater than that of plastic.

2. The separating element according to claim 1, **characterised in that** the structural element (6, 7) is comprised of steel or a ceramic.

3. The separating element according to claim 1 or 2, **characterised in that** the structural element (6, 7) includes sharp edges.

4. The separating element according to one of claims 1 to 3, **characterised in that** the cutting edge of the separating chisel (8), which cutting edge is formed by the structural element (6), is V-shaped in longitudinal section and is formed tapered or obliquely extending.

5. The separating element according to claim 4, **characterised in that** the angle of the cutting edge of the structural element (6) of the separating chisel (8) is between 180° and 90° on the end side.

6. The separating element according to one of claims 1 to 5, **characterised in that** the structural element (6, 7) has the shape of a small plate.

7. The separating element according to one of claims 1 to 6, **characterised in that** the structural element (6) of the separating chisel (8) extends up to inside the separating piston (5) and extends there essentially perpendicular to the cutting edge.

8. The separating element according to claim 7, **characterised in that** the structural element (6) of the separating chisel (8) is in the shape of an angle or is L-shaped.

9. The separating element according to one of claims 1 to 8, **characterised in that** the separating piston (5) including the separating chisel (8) and/or the housing (2) or a component (4) of the housing (2) is produced by plastic injection moulding, and the structural element (6, 7) is inserted into the plastic injection mould during plastic injection and is thus an integral component of the separating chisel (8) or of the housing (2) or of the component (4) of the housing (2).

## Revendications

1. Élément de séparation pyromécanique comprenant un boîtier (2) dans lequel est disposé un conducteur électrique (3), comprenant un piston de séparation (5) et un ciseau de séparation (8) en matière plastique disposé sur celui-ci, destiné à couper le conducteur électrique (3), et comprenant un allumeur pyrotechnique (1) dans lequel une charge pyrotechnique est disposée pour entraîner le piston de séparation (5), le ciseau de séparation (8) présentant une arête de coupe qui glisse le long d'une arête opposée du boîtier (2) ou d'un composant (4) du boîtier (2) lors de l'entraînement du piston de séparation (5) ou du ciseau de séparation (8) et lors de la coupure du conducteur électrique (3), **caractérisé en ce que** l'arête de coupe du ciseau de séparation (8) et/ou l'arête opposée du boîtier (2) ou d'un composant (4) du boîtier (2) est composée d'un élément de construction (6, 7) inséré d'une dureté supérieure à la matière plastique.

2. Élément de séparation selon la revendication 1, **caractérisé en ce que** l'élément de construction (6, 7) est composé d'acier ou d'une céramique.

3. Élément de séparation selon la revendication 1 ou 2, **caractérisé en ce que** l'élément de construction (6, 7) présente des arêtes de coupe aiguisées.

4. Élément de séparation selon l'une des revendications 1 à 3, **caractérisé en ce que** l'arête de coupe du ciseau de séparation (8) formée par l'élément de construction (6) est réalisée avec une section longitudinale en forme de V, en pointe ou en biais.

5. Élément de séparation selon la revendication 4, **caractérisé en ce que** l'angle de l'arête de coupe de l'élément de construction (6) du ciseau de séparation (8) sur la face frontale est compris entre 180 degrés et 90 degrés.

6. Élément de séparation selon l'une des revendications 1 à 5, **caractérisé en ce que** l'élément de construction (6, 7) a la forme d'une plaquette.

7. Élément de séparation selon l'une des revendications 1 à 6, **caractérisé en ce que** l'élément de construction (6) du ciseau de séparation (8) va jusque dans le piston de séparation (5) et s'y étend essentiellement perpendiculairement à l'arête de coupe.

8. Élément de séparation selon la revendication 7, **caractérisé en ce que** l'élément de construction (6) du ciseau de séparation (8) présente la forme d'un angle ou la forme d'un « L ».

9. Élément de séparation selon l'une des revendications 1 à 8, **caractérisé en ce que** le piston de séparation (5) doté du ciseau de séparation (8) et/ou le boîtier (2) ou un composant (4) du boîtier (2) sont fabriqués par la technologie d'injection de matière plastique et l'élément de construction (6, 7) est inséré dans le moule à injection de matière plastique lors de l'injection de matière plastique et fait ainsi partie intégrante du ciseau de séparation (8) ou du boîtier (2) ou du composant (4) du boîtier (2).
